(19) Europäisches Patentamt
European Patent Office
Office européen des brevets

(11) **EP 1 874 839 B1**

(12) **EUROPÄISCHE PATENTSCHRIFT**

(45) Veröffentlichungstag und Bekanntmachung des Hinweises auf die Patenterteilung:
**10.12.2014 Patentblatt 2014/50**

(51) Int Cl.:
***C08G 18/10*** *(2006.01)*     ***C08G 18/42*** *(2006.01)*
***C08J 9/00*** *(2006.01)*

(21) Anmeldenummer: **06725697.4**

(22) Anmeldetag: **11.04.2006**

(86) Internationale Anmeldenummer:
**PCT/EP2006/061506**

(87) Internationale Veröffentlichungsnummer:
**WO 2006/108833 (19.10.2006 Gazette 2006/42)**

(54) **VERFAHREN ZUR HERSTELLUNG VON POLYURETHAN- UND POLYISOCYANURAT-HARTSCHAUMSTOFFEN**

METHOD FOR PRODUCING POLYURETHANE AND POLYISOCYANURATE RIGID FOAM

PROCEDE DE PRODUCTION DE MOUSSES RIGIDES DE POLYURETHANE ET DE POLYISOCYANURATE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.04.2005   DE 102005017363**

(43) Veröffentlichungstag der Anmeldung:
**09.01.2008   Patentblatt 2008/02**

(73) Patentinhaber: **BASF SE**
**67056 Ludwigshafen (DE)**

(72) Erfinder:
• **MALOTKI, Peter**
**49448 Lemförde (DE)**
• **LEHMANN, Pit**
**49074 Osnabrück (DE)**
• **HENSIEK, Rainer**
**49328 Melle (DE)**
• **SCHÖN, Lars**
**48529 Nordhorn (DE)**

(56) Entgegenhaltungen:
**EP-A- 0 415 159     WO-A-00/23491**
**WO-A-02/40566     US-A- 5 962 541**

**EP 1 874 839 B1**

**Beschreibung**

Gegenstand der Erfindung ist ein Verfahren zur Herstellung von Polyurethan- und Polyisocyanurat-Hartschaumstoffen durch Umsetzung von Polyisocyanaten mit Verbindungen mit mindestens zwei mit Isocyanatgruppen reaktiven Wasserstoffatomen.

Polyurethan- und Polyisocyanurat-Hartschaumstoffe sind seit langem bekannt und werden in der Technik breit eingesetzt. Ein wesentliches Einsatzgebiet der Polyurethan- und Polyisocyanurat-Hartschaumstoffe sind Verbundelemente.

Die Herstellung von Verbundelementen aus insbesondere metallischen Deckschichten und einem Kern aus Schaumstoffen auf Isocyanatbasis, zumeist Polyurethan- (PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt. Insbesondere bei den Fassadenelementen spielt die Haftung zwischen Schaum und der Deckschicht eine entscheidende Rolle. Bei einem dunklen Farbton kann sich die isolierte äußere Deckschicht leicht auf Temperaturen um 80°C aufheizen. Bei einer unzureichenden Haftung des Schaums an der Deckschicht entstehen auf der Oberfläche Ausbeulungen, die durch Schaumablösungen vom Blech hervorgerufen werden und die Fassade unansehnlich machen sowie die Statik der Konstruktion negativ beeinflussen können. Solche Ausbeulungen können auch durch Bodenstörungen des Schaums auf der Blechunterseite hervorgerufen werden. Typische Bodenstörungen sind beispielsweise Lunker, die zum Beispiel durch Kontaminationen auf der Blechrückseite hervorgerufen werden können. Zur Beseitigung dieser Probleme werden schon bei der Coil-Herstellung Haftvermittlerlacke aufgetragen. Aus verfahrenstechnischen Gründen sind jedoch in den Haftvermittlerlacken Zusatzstoffe wie Fließhilfsmittel, Hydrophobiermittel, Entlüfter und Ähnliches enthalten. Diese Zusatzstoffe stören den Polyurethanschäumprozess zum Teil erheblich. Hinzu kommen Wechselwirkungen im Stahlcoil zwischen Gutseiten- und Rückseitenlack. Die so zusätzlich auf die Rückseite übertragenen Substanzen haben häufig ebenfalls einen negativen Einfluss auf den PUR-Schäumprozess und führen zu ungewünschten Effekten wie beispielsweise Lunker im Sandwichelement. Auch die bekannte Corona-Behandlung der Deckschichten reicht in vielen Fällen nicht aus, um diese Störungen zu beseitigen. Weiterhin ist es möglich, dass die Temperatur des Doppelbandes nicht optimal auf das jeweilige System abgestimmt ist. Dies gilt insbesondere bei Anfahrvorgängen in der Produktion, wenn noch kein stationärer Zustand erreicht ist. Dieses kann ebenfalls einen negativen Einfluss auf den Schäumprozess und die Haftung des Schaums zu den metallischen Deckschichten haben.

Aufgabe der vorliegenden Erfindung war es deshalb, ein Polyurethan- bzw. Polyisocyanuratsystem zur Verfügung zu stellen, welches auch bei schwankenden äußeren Einflüssen und Produktionsbedingungen eine gleichbleibend hohe Qualität der produzierten Sandwichelemente sicherstellt. Dabei sollte insbesondere eine gute Haftung des Schaums zu den Deckschichten, auch über einen langen Zeitraum, sichergestellt, Bodenstörungen minimiert sowie ein möglichst hoher Umsatz der Isocyanatgruppen erreicht werden.

Die Aufgabe konnte überraschend gelöst werden, indem als Polyisocyanate Isocyanatgruppen enthaltende Prepolymere eingesetzt werden und die Verbindungen mit zwei mit Isocyanatgruppen reaktiven Wasserstoffen mindestens einen Polyesteralkohol enthalten, der unter Mitverwendung mindestens einer hydrophoben Einsatzkomponente hergestellt wurde.

Der Einsatz von Isocyanatprepolymeren zur Herstellung von Polyurethan- und Polyisocyanurathartschaumstoffen ist bekannt. US 5164422 beschreibt den Einsatz von Isocyanatprepolymeren mit R11 als Treibmittel zur Verbesserung der Dämmeigenschaften der Schaumstoffe. EP 320134 beschreibt den Einsatz von Isocyanatprepolymeren mit R11 als Treibmittel zur Verbesserung der Verträglichkeit von A- und B-Komponente. Ebenfalls bessere Verarbeitungseigenschaften durch den Einsatz von Isocyanatprepolymeren wurden in US 5254600 gezeigt. Eine Verbesserung der Wärmeleitfähigkeit der Hartschaumstoffe durch den Einsatz von Isocyanatprepolymeren wurde in EP 394736 gezeigt. JP 2000-264945 beschreibt Sandwichelemente mit guten Oberflächen durch den Einsatz von Isocyanatprepolymeren. In WO 240566 ist der Einsatz von Isocyanatprepolymeren zur Verbesserung der flammhemmenden Eigenschaften sowie der Mechanik des Polyurethan- und Polyisocyanurat-Hartschaums beschrieben.

WO 00/23491 offenbart ein Verfahren zur Herstellung eines Polyurethanhartschaumes aus einem Prepolymer verschäumt mit Wasser als Blähmittel. Durch die Umsetzung von 4,4'-Methylen-Diisocyanat mit einem Umesterungsprodukt von Rizinusöl und Soyaöl entsteht das D1-Prepolymer (%NCO= 11).

EP 0 415 159 beschreibt die Herstellung von Polyurethanhartschaumstoffen durch Umsetzung von Prepolymeren aus monomeren und polymeren MDI und hydrophoben Polyethern. Der NCO-Gehalt schwankt zwischen 26 und 29%.

Es wird jedoch in keinem der genannten Dokumente beschrieben oder auch nur nahegelegt, dass durch den Einsatz von Prepolymeren mit den von uns beanspruchten Eigenschaften in Verbindung mit der Verwendung der Polyesteralkohole bi) die Aufgabe der vorliegenden Erfindung gelöst werden kann.

Gegenstand der Erfindung ist demzufolge ein Verfahren zur Herstellung von Polyurethan- und Polyisocyanurat-Hartschaumstoffen durch Umsetzung von Polyisocyanaten a) mit Verbindungen mit mindestens zwei mit Isocyanatgruppen reaktiven Wasserstoffatomen b) in Anwesenheit von Treibmitteln c), dadurch gekennzeichnet, dass als Polyisocyanate a) Isocyanatgruppen enthaltende Prepolymere auf Basis von monomerem (MMDI) und polymerem Diphenylmethandiisocyanat (PMDI) mit einem NCO-Gehalt im Bereich von 25 bis 31 Gew.-%, vorzugsweise 26 - 30 Gew.-%, besonders bevorzugt 28-29 Gew.-% bezogen auf das Gewicht des Prepolymeren, hergestellt durch Umsetzung von ai) Mischungen aus monomerem und polymerem Diphenylmethandiisocyanat mit aii) mindestens einer Verbindung mit mehr als einem mit Isocyanatgruppen reaktiven Wasserstoffatom, eingesetzt werden und die Verbindungen mit mindestens zwei mit Isocyanatgruppen reaktiven Wasserstoffatomen b) mindestens einen Polyesteralkohol bi), der unter Verwendung mindestens einer Ausgangskomponente, die hydrophob ist, hergestellt wurde, enthalten.

Durch den erfindungsgemäßen NCO-Gehalt werden Verbesserungen in den Verarbeitungseigenschaften des Systems erreicht, beispielsweise eine verringerte Bodenstöranfälligkeit und eine verbesserte Haftung, und es werden für den Fall der Herstellung von Polyisocyanurathartschaumstoffen auch noch ausreichend PIR-Strukturen gebildet, um einen hervorragenden Flammschutz zu erreichen. Wird der NCO-Gehalt der Prepolymere unter den angegebenen Bereich abgesenkt, stehen nicht mehr genügend Isocyanatgruppen für die PIR-Reaktion zur Verfügung, und die flammhemmenden Eigenschaften des Schaumstoffes verschlechtern sich. Weiterhin steigt bei NCO-Gehalten von kleiner 26 Gew.-% die Viskosität des Prepolymers stark an, sodass die Verarbeitbarkeit des Systems beeinträchtigt wird.

Die Herstellung der als Polyisocyanate a) eingesetzten Prepolymere erfolgt nach üblichem Verfahren durch Umsetzung eines Überschusses einer Isocyanatkomponente ai) mit einer Polyolkomponente aii), wobei der NCO-Wert der Prepolymere 25-31 Gew.-%, bevorzugt 26-30 Gew.-%, besonders bevorzugt 28-29 Gew.-% beträgt.

Als Isocyanatkomponente ai) für die Herstellung der Prepolymere werden monomeres MDI oder Gemische aus monomerem und polymerem MDI eingesetzt Derartige Gemische werden auch als Roh-MDI bezeichnet. Vorzugsweise haben diese Gemische einen NCO-Gehalt von 29-33 Gew.-%, und einen Anteil an 2-Kern MDI von 41 ± 5 Gew.-%, bezogen auf das Gewicht des PMDI.

Als monomeres MDI können 4,4'-MDI, 2,4'-MDI und 2,2'-MDI sowie beliebige Mischungen der genannten Isomere eingesetzt werden. Es ist weiterhin möglich, das monomere MDI durch Einbau von funktionellen Gruppen zu modifizieren. Dies kann dazu dienen, das monomere MDI zu verflüssigen, es können jedoch auch gezielt die Eigenschaften des MDI verändert werden. Als funktionelle Gruppen können beispielsweise Allophanat-, Uretdion- oder Isocyanuratgruppen in das MDI eingebaut werden. Weiterhin können TDI, HDI, NDI und IPDI als Isocyanate eingesetzt werden.

Aus Gründen der Verarbeitbarkeit auf dem Doppelband sollte die Viskosität des Prepolymers bei 25°C im Bereich zwischen 100 - 3000 mPas, bevorzugt 200 - 1500 mPas, besonders bevorzugt 300 - 1200 mPas liegen. Das Prepolymer sollte weiterhin einen Gehalt an monomerem MDI von 28 bis 38 Gew.-%, bevorzugt 28-29 Gew.-%, bezogen auf das Gewicht des Prepolymeren, aufweisen.

Als Verbindungen mit mindestens zwei mit Isocyanatgruppen reaktiven Wasserstoffatomen aii) für die Herstellung der Isocyanatgruppen enthaltenden Prepolymere a) werden insbesondere mehrfunktionelle Alkohole eingesetzt. Vorzugsweise kommen Polyetheralkohole und/oder Polyesteralkohole zum Einsatz. Insbesondere werden 1,5-bis 3-funktionelle, besonders bevorzugt 1,5 bis 2,5-funktionelle Polyether- und/oder Polyesteralkohole eingesetzt. Bei Verwendung von Alkoholen mit höheren Funktionalitäten würde die Viskosität der Prepolymere zu stark ansteigen.

Die als Komponente aii) eingesetzten Polyesteralkohole haben vorzugsweise eine Hydroxylzahl im Bereich zwischen 50 und 400 mg KOH/g, besonders bevorzugt 100 und 300 mg KOH/g, und insbesondere 150 und 250 mg KOH/g.

Die Polyesteralkohole aii) werden zumeist auf üblichem Wege durch Umsetzung von mehrfunktionellen Alkoholen mit mehrfunktionellen Carbonsäuren oder Carbonsäurederivaten, insbesondere Anhydriden, hergestellt. Als Alkohole werden zumeist 2- oder 3-funktionelle Alkohole eingesetzt, beispielsweise Ethylenglykol, Diethylenglykol, Propylenglykol, Dipropylenglykol, Glycerol, Trimethylolpropan und/oder Butandiol. Als Carbonsäuren werden vorzugsweise Adipinsäure, Phthalsäure und/oder Phthalsäureanhydrid eingesetzt.

Die als Komponente aii) eingesetzten Polyetheralkohole haben vorzugsweise eine Hydroxylzahl im Bereich zwischen 50 und 300 mgKOH/g, insbesondere 80 und 250 mg KOH/g.

Die Polyetheralkohole aii) werden vorzugsweise durch Anlagerung von Alkylenoxiden an 2- und/oder 3-funktionelle Alkohole mit einem Molekulargewicht von 62 bis 400 hergestellt. Als Alkylenoxide werden zumeist Ethylenoxid und/oder Propylenoxid eingesetzt. Als Alkohole können beispielsweise Ethylenglykol, Diethylenglykol, Propylenglykol, Glyzerin oder beliebige Mischungen aus diesen Alkoholen eingesetzt werden. Die Anlagerung der Alkylenoxide an die Startsubstanzen erfolgt auf üblichem Wege, zumeist unter Verwendung von basischen Katalysatoren.

In einer bevorzugten Ausführungsform des erfindungsgemäßen Verfahrens werden bei der Herstellung der Polyesteralkohole aii) auch hydrophobe Einsatzstoffe mitverwendet. Bei den hydrophoben Stoffen handelt es sich um wasserunlösliche Stoffe die einen unpolaren organischen Rest enthalten sowie über mindestens eine reaktive Gruppe aus der Reihe Hydroxyl, Carbonsäure, Carbonsäurester oder Mischungen derer verfügen. Das Äquivalentgewicht der hydrophoben Materialen liegt zwischen 130 und 1000. Verwendet werden können zum Beispiel Fettsäuren wie Stearinsäure, Ölsäure, Palmitinsäure, Laurinsäure oder Linolsäure sowie Fette und Öle wie zum Beispiel Rizinusöl, Maisöl, Sonnenblumenöl, Sojabohnenöl, Kokosnussöl, Olivenöl oder Tallöl. Wenn hydrophobe Einsatzstoffe mitverwendet werden, kommen Sie in einer Menge von 1-20 Mol-%, bevorzugt 4-15 Mol%, bezogen auf den Polyesteralkohol, zum Einsatz.

Als Verbindungen mit mindestens zwei mit Isocyanatgruppen reaktiven Wasserstoffatomen b) zur Herstellung der Polyurethane und/oder Polyisocyanurate kommen vorzugsweise Alkohole, insbesondere Polyetheralkohole und/oder Polyesteralkohole, zum Einsatz. Die Verbindungen mit mindestens zwei mit Isocyanatgruppen reaktiven Wasserstoffatomen b) enthalten mindestens einen Polyesteralkohol bi), der unter Verwendung von hydrophoben Einsatzstoffen hergestellt wurde. Diese Polyesteralkohole entsprechen in ihrem Aufbau den zur Herstellung der Isocyanatgruppen enthaltenden Prepolymere verwendeten hydrophoben Polyesteralkoholen aii). Die Polyesteralkohole aii) und bi) können verschieden oder identisch sein. In einer bevorzugten Ausführungsform sind die Polyesteralkohole aii) und bi) identisch.

Der Polyesteralkohol bi) kann als alleinige Verbindung mit mindestens zwei mit Isocyanatgruppen reaktiven Wasserstoffatomen eingesetzt werden. In einer weiteren Ausführungsform des erfindungsgemäßen Verfahrens werden neben dem Polyesteralkohol bi) weitere Verbindungen mit mindestens zwei mit Isocyanatgruppen reaktiven Wasserstoffatomen eingesetzt.

Die in Kombination mit den Polyesteralkoholen bi) eingesetzten Polyole können Polyetheralkohole bii) und/oder Polyesteralkohole biii) sein.

Bei den Polyetheralkoholen bii) handelt es sich bevorzugt um solche mit einer Funktionalität von 2 bis 3 und einer Hydroxylzahl im Bereich zwischen 50 und 300 mg KOH/g, wie sie zur Herstellung der Prepolymere eingesetzt werden und oben beschrieben sind.

Bei den Polyesteralkoholen biii) handelt es sich vorzugsweise um 1,5- bis 3-, besonders bevorzugt 1,5 bis 2,5-funktionelle mit einer Hydroxylzahl im Bereich zwischen 50 und 400 mg KOH/g, wie sie auch zur Herstellung der Prepolymere eingesetzt werden können und oben beschrieben sind. Die Polyesteralkohole biii) werden ohne Mitverwendung einer hydrophoben Einsatzkomponente hergestellt.

In einer besonderen Ausführungsform sind sowohl die zur Herstellung der Prepolymere verwendeten Polyesteralkohole aii) als auch die in der Komponente b) eingesetzten Polyesteralkohole bi) frei von Terephthalsäure.

Die Anteile der Polyole bi), bii) und biii) betragen vorzugsweise bi) 20-90 Gew.-%, bii) 5-30 Gew.-%, biii) 0-90 Gew.-% und besonders bevorzugt bi) 20-90 Gew.-%, bii) 5-30 Gew.-% und biii) 5-90 Gew.-% wobei die Summe aus bi), bii) und biii) 100 beträgt.

Als Polyetheralkohole bii) können zusätzlich zu den oben beschriebenen Polyetheralkoholen oder an Stelle der oben beschriebenen Polyetheralkohole auch Polyetheralkohole eingesetzt werden, wie sie üblicherweise zur Herstellung von Polyurethan-Hartschaumstoffen Anwendung finden. Dabei handelt es sich um Polyetheralkohole, die eine Funktionalität von mindestens 2 bis 6 und eine Hydroxylzahl größer 250 mg KOH/g aufweisen und, wie auch die in der Komponente aii) eingesetzten Polyetheralkohole, nach bekannten Verfahren, beispielsweise durch anionische Anlagerung von Alkylenoxiden an H-funktionelle Startsubstanzen in Gegenwart von basischen Katalysatoren, insbesondere Alkalihydroxiden, hergestellt werden. Als Alkylenoxide werden vorzugsweise Ethylenoxid und Propylenoxid eingesetzt. Die Alkylenoxide können einzeln, alternierend nacheinander oder als Mischungen verwendet werden.

Als Startermoleküle kommen in Betracht: Wasser, Alkanolamine, wie z.B. Ethanolamin, N-Methyl- und N-Ethylethanolamin, Dialkanolamine, wie Diethanolamin, N-Methyl- und N-Ethyldiethanolamin und Trialkanolamine wie z.B. Triethanolamin und Ammoniak sowie Toluylendiamin und Diaminodiphenylmethan.

Vorzugsweise können mehrwertige, insbesondere zwei- bis achtwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie z.B. 4,4'-Dihydroxy-diphenylmethan und 4,4'-Dihydroxy-diphenylpropan-2,2, Resole, wie z.B. oligomere Kondensationsprodukte aus Phenol und Formaldehyd und Mannich-Kondensate aus Phenolen, Formaldehyd und Dialkanolaminen sowie Melamin eingesetzt werden.

Die Polyesteralkohole biii) können, wie bei der Behandlung der Komponente ai) ausgeführt, durch Umsetzung von mehrfunktionellen Carbonsäuren mit mehrfunktionellen Alkoholen hergestellt werden.

Das erfindungsgemäße Verfahren wird üblicherweise in Gegenwart von Treibmitteln c) sowie Katalysatoren, Flammschutzmitteln und üblichen Hilfs- und/oder Zusatzstoffen durchgeführt. Zu diesen Verbindungen ist im einzelnen folgendes zu sagen.

Als Treibmittel c) kann Wasser verwendet werden, das mit Isocyanatgruppen unter Abspaltung von Kohlendioxid reagiert. Weiterhin können Carbonsäuren, bevorzugt Ameisensäure und/oder Essigsäure als chemisches Treibmittel eingesetzt werden. In Kombination mit oder vorzugsweise an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die physikalischen Treibmittel werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Beispielhaft seien genannt Propan, n-Butan, iso- und Cyclobutan, n-, iso- und Cyclopentan, Cyclohexan, Dimethylether, Methylethylether, Methylbutylether, Ameisensäuremethylester, Aceton, sowie Fluoralkane, wie Trichlorfluormethan (R11), Dichlorfluormethan (141b), 1,1,1,3,3-Pentafluorbutan (365 mfc), 1,1,1,3,3-Pentafluorpropan (245fa) und 1,1,1,2-Tetrafluorethan (134a). Die genannten physikalischen Treibmittel können allein oder in beliebigen Kombinationen untereinander eingesetzt werden. Vorzugsweise werden Isomere des Pentans, insbesondere Cyclopentan und n-Pentan, besonders bevorzugt n-Pentan, eingesetzt.

Bevorzugt ist weiterhin, als chemisches Treibmittel Carbonsäuren, bevorzugt Ameisensäure, und als physikalisches Treibmittel Wasserstofffluorkohlenwasserstoffe einzusetzen

Weiterhin ist bevorzugt, dass als chemisches Treibmittel Wasser und als physikalisches Treibmittel Kohlenwasserstoffe, bevorzugt Homologe des Pentan, besonders bevorzugt n-Pentan verwendet werden.

Weiterhin ist bevorzugt, dass als chemisches Treibmittel Carbonsäuren, bevorzugt Ameisensäure, und als physikalisches Treibmittel Kohlenwasserstoffe, bevorzugt Homologe des Pentan, besonders bevorzugt n-Pentan verwendet werden.

Die eingesetzten Treibmittel sind vorzugsweise frei von Fluor-Chlor-Kohlenwasserstoffen (FCKW), bevorzugt frei von FCKW und FKW, besonders bevorzugt frei von FCKW, FKW und HFKW.

Die Polyurethan- oder Polyisocyanuratschaumstoffe enthalten weiterhin Flammschutzmittel. Vorzugsweise werden bromfreie Flammschutzmittel eingesetzt. Besonders bevorzugt sind Flammschutzmittel enthaltend Phosphoratome wie beispielsweise Trischlorisopropylphosphat, Diethylethanphosphonat, Triethylphosphat, Diphenylkresylphosphat und alkoxylierte Alkyl-Phosphonsäuren wie z.B. Exolit OP 560.

In einer besonders bevorzugten Ausführungsform werden ausschließlich halogenfreie Flammschutzmittel eingesetzt.

Als Katalysatoren werden insbesondere Verbindungen eingesetzt, welche die Reaktion der Isocyanatgruppen mit den mit Isocyanatgruppen reaktiven Wasserstoffatomen stark beschleunigen. Solche Katalysatoren sind zumeist stark basische Amine, wie z.B. tertiäre aliphatische Amine, Imidazole, Amidine, sowie Alkanolamine, und/oder metallorganische Verbindungen, insbesondere solche auf Basis von Zinn.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere kaliumformiat, Kaliumacetat und Kaliumoktoat, die äquivalenten Ammoniumsalze sowie deren Lösungen, eingesetzt.

Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Hydrolyseschutzmittel, Antistatika, fungistatisch und bakteriostatisch wirkende Mittel zum Einsatz.

Zur Herstellung der Hartschaumstoffe auf Isocyanatbasis werden die Polyisocyanate a) und die Verbindungen mit mindestens zwei mit Isocyanatgruppen reaktiven Wasserstoffatomen b) in solchen Mengen zur Umsetzung gebracht, dass der Isocyanatindex im Falle der Polyurethan-Schaumstoffe in einem Bereich zwischen 100 und 220, vorzugsweise zwischen 105 und 180, liegt. Bei der Herstellung von Polyisocyanuratschäumen kann auch mit einem Index vorn > 180, vorzugsweise 200-500, bevorzugt 225-400, besonders bevorzugt 280-400, gearbeitet werden.

Die Polyurethan-bzw. Polyisocyanurat-Hartschaumstoffe können diskontinuierlich oder kontinuierlich mit Hilfe bekannter Mischvorrichtungen hergestellt werden. Die Vermischung der Ausgangskomponenten kann mit Hilfe bekannter Mischvorrichtungen erfolgen.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen den Treibmitteln, den Katalysatoren sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen vermischt werden.

Bevorzugt werden die erfindungsgemäßen Hartschaumstoffe auf kontinuierlich arbeitenden Doppelbandanlagen hergestellt. Hier werden, bevorzugt mit einer Hochdruckmaschine, die Polyol- und Isocyanatkomponente dosiert und in einem Mischkopf vermischt. Dem Polyolgemisch können zuvor mit separaten Pumpen Katalysatoren und/oder Treibmittel zudosiert werden. Das Reaktionsgemisch wird kontinuierlich auf die untere Deckschicht aufgetragen. Die untere Deckschicht mit dem Reaktionsgemisch und die obere Deckschicht laufen in das Doppelband ein. Hier schäumt das Reaktionsgemisch auf und härtet aus. Nach dem Verlassen des Doppelbandes wird der endlose Strang in den gewünschten Abmessungen zerschnitten. Auf diese Weise können Sandwichelemente mit metallischen Deckschichten oder Dämmelemente mit flexiblen Deckschichten hergestellt werden

Die Verbundelemente können auch diskontinuierlich hergestellt werden. Die Ausgangskomponenten werden dabei zumeist bei einer Temperatur von 15 bis 35°C, vorzugsweise von 20 bis 30°C gemischt. Das Reaktionsgemisch kann mit Hoch- oder Niederdruckdosiermaschinen in geschlossene Stützwerkzeuge gegossen werden.

Die Dichte der nach dem erfindungsgemäßen Verfahren hergestellten Hartschaumstoffe beträgt 10 bis 400 kg/m$^3$, vorzugsweise 20-200, insbesondere 30 bis 100 kg/m$^3$.

Die Dicke der Verbundelemente beträgt üblicherweise 5 bis 300 mm, bevorzugt 5 bis 250 mm.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Bei dem erfindungsgemäßen Verfahren konnten unter konstanten Verarbeitungsbedingungen eine Verbesserung der Haftung, eine geringere Bodenstörempfindlichkeit sowie ein signifikant höherer Umsatz der NCO-Gruppen, besonders auch in der Randzone der Sandwichelemente, festgestellt werden. Ein möglichst hoher Umsatz der NCO-Gruppen ist erforderlich, da ein unvollständiger Umsatz, besonders in der Randzone, eine Untervernetzung des Schaums zur Folge hat, die für lokale Schwachstellen bezüglich der Mechanik des Schaums verantwortlich sein kann. Das Brandverhalten sowie die Wärmeleitfähigkeit des Schaums blieben unverändert. Mit dem erfindungsgemäßen Verfahren konnten bei schwankenden Produktionsbedingungen die damit im Normalfall einhergehende Erhöhung der Bodenstöranfälligkeit, die Verschlechterung der Haftung des Schaums zu metallischen Deckschichten sowie ein verminderter Umsatz der Isocyanatgruppen vermieden werden.

Die Erfindung soll an den nachfolgenden Beispielen näher beschrieben werden.

Eingesetzte Rohstoffe

- Polyesterol 1 hergestellt aus Phthalsäureanhydrid und Diethylenglycol, Funktionalität 2, OHZ 250 mg KOH/g
- Polyesterol 2 hergestellt aus Phthalsäureanhydrid, Diethylenglycol, Monoethylenglycol und Ölsäure, Funktionalität 1,8, OHZ 200 mg KOH/g
- Polyetherol 1 hergestellt aus Propylenglycol und Propylenoxid, Funktionalität 2, OHZ 100 mg KOH/g
- Polyetherol 2 hergestellt aus Monoethylenglycol und Ethylenoxid, Funktionalität 2, OHZ 200 mg/KOH/g
- Flammschutzmittel TCPP (Trischlorisopropylphosphat)
- Stabilisator Tegostab® B 8443 (Degussa)
- Katalysator 1 Trimerisierungskatalysator (Salz einer Carbonsäure gelöst in Polyol)
- Katalysator 2 aminhaltiger PUR-Katalysator
- Treibmittel 1 n-Pentan
- Treibmittel 2 ZM 99 (Wasser in Propylenglycol)
- Isocyanat 1 monomeres MDI (Lupranat® ME, BASF AG)
- Isocyanat 2 polymeres MDI (Lupranat®M 20W bzw. Lupranat® M 20S, BASF AG)
- Isocyanat 3 polymeres MDI (Lupranat®M 50, BASF AG)
- Isocyanat 4 polymeres MDI (Lupranat®M 70R, BASF AG)
- Isocyanat 5 polymeres MDI (Lupranat®M 200R, BASF AG)

Herstellung der Prepolymere

Beispiel 1

100 Teile Isocyanat 2 wurden in einem Rundkolben vorgelegt und auf 60°C erhitzt. Unter Stickstoff wurden 11,7 Teile Polyesterol 2 zugegeben und anschließend 2 Stunden bei 80°C gerührt. Das Prepolymer (Nummer 1) wurde abgekühlt und die Viskosität und der NCO-Gehalt bestimmt.

Das Prepolymer hatte einen NCO-Gehalt von 26,3 Gew.-%, und eine Viskosität bei 25°C von 1780 mPas.

Beispiel 2

100 Teile Isocyanat 2 wurden in einem Rundkolben vorgelegt und auf 60°C erhitzt. Unter Stickstoff wurden 8 Teile Polyesterol 2 zugegeben und anschließend 2 Stunden bei 80°C gerührt. Das Prepolymer (Nummer 2) wurde abgekühlt und die Viskosität, der NCO-Gehalt sowie die Kernverteilung bestimmt.

Das Prepolymer hatte einen NCO-Gehalt von 28,2 Gew.-%, eine Viskosität bei 25°C von 910 mPas und einen Gehalt an 2-Kern-MDI von 34,6 Gew.-%.

Beispiel 3

100 Teile Isocyanat 2 wurden in einem Rundkolben vorgelegt und auf 60°C erhitzt. Unter Stickstoff wurden 4,5 Teile Polyesterol 2 sowie 4,5 Teile Polyetherol 1 zugegeben und anschließend 2 Stunden bei 80°C gerührt. Das Prepolymer (Nummer 9) wurde abgekühlt und die Viskosität und der NCO-Gehalt bestimmt.

Das Prepolymer hatte einen NCO-Gehalt von 27,8 Gew.-% und eine Viskosität bei 25°C von 860 mPas und einen Gehalt an 2-Kern-MDI von 33,1 Gew.-%.

Alle weiteren Prepolymere wurden nach dem gleichen Verfahren hergestellt. Die Menge an Polyolkomponente wurde dabei je nach gewünschtem Ziel NCO-Wert variiert.

Tabelle 1. Bestandteile der Prepolymere und analytische Daten (n.b. = nicht bestimmt)

| Prepolymer-Nr. | Iso-Komp. | Polyol-Komp. | NCO [%] | Viskosität [25°C, mPas] | Zweikern-Anteill [Gew.-%] |
|---|---|---|---|---|---|
| 1 | Isocyanat 2 | Polyesterol 2 | 26,3 | 1780 | n.b. |
| 2 | Isocyanat 2 | Polyesterol 2 | 28,2 | 910 | 34,6 |
| 3 | Isocyanat 2 | Polyesterol 2 | 29,4 | 540 | n.b. |
| 4 | Isocyanat 1 | Polyesterol 2 | 27,5 | Fest, (20 bei 75°C) | 80,4 |
| 5 | Isocyanat 4 | Polyesterol 2 | 27,5 | 3400 | 24,3 |
| 6 | Isocyanat 5 | Polyesterol 2 | 27,4 | 14100 | 17,2 |
| 7 | Isocyanat 2 | Polyetherol 1 | 28,0 | 620 | 35,6 |
| 8 | Isocyanat 2 | Polyetherol 2 | 28,2 | 660 | 35,1 |
| 9 | Isocyanat 2 | Polyesterol 2 + Polyetherol 1 | 27,8 | 860 | 33,1 |

Die Viskosität der Prepolymere wurde mit einem Haake VT 500 Rotationsviskosimeter bei 25°C direkt nach Beendigung der Prepolymersynthese bestimmt (angegebene Werte). Der NCO-Gehalt der Prepolymere wurde ebenfalls direkt nach Beendigung der Synthese folgendermaßen bestimmt: Das Prepolymer wurde in N-Methylpyrrolidon (NMP) gelöst und mit einem Überschuss an Di-n-Hexylamin versetzt. Das überschüssige Amin wurde mit Salzsäure zurücktitriert.

Der Zweikernanteil der Prepolymere wurde mittels Gelchromatographie analysiert (Brechungsindexanaiyse). Die erhaltenen Analysedaten wurden nach vorheriger Eichung mit Monomer-MDI in Gewichtsprozent umgerechnet.

Herstellung von Polyurethan bzw. Polyisocyanurathartschaumstöffen.

Aus den Polyolen, Flammschutzmitteln und Stabilisatoren wurde durch Vermischen eine Polyolkomponente hergestellt. Die Polyolkomponente und das Prepolymer wurden unter Zusatz von Katalysator und Treibmittel derart verschäumt das die Abbindezeit (Fadenziehzeit) jeweils 45 Sekunden und die Rohdichte jeweils 45 g/l betrug.

Zur Messung der Haftung zwischen Schaum und Deckschicht wurden im Labor Prüfkörper der Dimension 200x200x80 mm mit zwei metallischen Deckschichten in einer temperierbaren Metallform bei 50°C hergestellt. Nach Aushärtung des Systems wurden aus der Mitte Prüfkörper der Abmessung 100x100x80 mm gesägt und die Haftung des Schaums zu den Deckschichten nach DIN EN ISO 527-1 / DIN 53292 bestimmt.

Der NCO-Umsatz wurde mittels IR-Spektroskopie bestimmt. Dabei wurde nach einem reproduzierbaren Verfahren jeweils ein Prüfkörper aus der Mitte und dem Rand der hergestellten Sandwichelemente entnommen und mittels ATR-FTIR-Spektroskopie (Golden Gate Anordnung) vermessen. Die Extinktion (E) der NCO-Bande bei 2270 cm$^{-1}$ wurde zur Extinktion einer Aromatenreferenzbande bei 1600 cm$^{-1}$ ins Verhältnis gesetzt: $E_{NCO}=E_{2270cm-1}/E_{1600cm-1}$. Der Umsatz wurde anhand der Abnahme des Extinktionsverhältnisses des ausreagierten Systems im Verhältnis zu einem unreagierten Aüsgangssystem (kein Katalysator) berechnet:

$$\text{Umsatz} = [1-(E_{NCOausreagiert}/E_{NCOunreagiert})]*100.$$

Die Sandwichelemente wurden auf dem Doppelband (60°C) mit einer Bandgeschwindigkeit von 6 m/min hergestellt (80 mm Dicke). Die Häufigkeit der Bodenstörungen wur-de nach Abziehen der Deckschicht von der unteren Elementseite nach einer optischen Methode bestimmt. Als Vergleichsbeispiele wurden herangezogen: i) Doppelbandtemperatur von 55°C und ii) Einsatz von kontaminierten Blechen (Bleche enthielten auf der Rückseite eine erhöhte Menge an Verunreinigungen - detektiert mit TOF-SIMS Spektroskopie).

Tabelle 2 Verschäumte Lupranat® M 50 (Vergleichsbeispiel 1) sowie Prepolymersysteme unter konstanten Versuchsbedingungen. Die Sandwichelemente zur Beurteilung der Bodenstörungen wurden mit einer Doppelbandtemperatur von 60°C und konstanter Blechqualität produziert. Die Wärmeleitfähigkeit (21,4 mW/mK bei 23 °C nach DIN 52612) der Systeme 1-9 war identisch.

| | 1 | 2 | 3 | 4 | 5 | 6 | 7 | 8 | 9 |
|---|---|---|---|---|---|---|---|---|---|
| Polyesterol 1 | 48 | 48 | 48 | 48 | 48 | 48 | 48 | 48 | 68 |
| Polyesterol 2 | 20 | 20 | 20 | 20 | 20 | 20 | 20 | 20 | - |
| Polyetherol 2 | 10 | 10 | 10 | 10 | 10 | 10 | 10 | 10 | 10 |
| Flammschutzmittel | 20 | 20 | 20 | 20 | 20 | 20 | 20 | 20 | 20 |
| Stabilisator | 2 | 2 | 2 | 2 | 2 | 2 | 2 | 2 | 2 |
| | | | | | | | | | |
| Katalysator 1 | 1,5 | 1,5 | 1,5 | 1,5 | 1,5 | 1,5 | 1,5 | 1,5 | 1,5 |
| Katalysator 2 | 1,5 | 1,5 | 1,5 | 1,5 | 1,5 | 1,5 | 1,5 | 1,5 | 1,5 |
| | | | | | | | | | |
| Treibmittel 1 | 13 | 14 | 14 | 14 | 14 | 14 | 14 | 14 | 14 |
| Treibmittel 2 | 0,7 | 0,7 | 0,7 | 0,7 | 0,7 | 0,7 | 0,7 | 0,7 | 0,7 |
| | | | | | | | | | |
| Isocyanat 3 | 190 | | | | | | | | |
| Prepolymer 2 | | 210 | | | | | | | 210 |
| Prepolymer 4 | | | 210 | | | | | | |
| Prepolymer 5 | | | | 210 | | | | | |
| Prepolymer 6 | | | | | 210 | | | | |
| Prepolymer 7 | | | | | | 210 | | | |
| Prepolymer 8 | | | | | | | 210 | | |
| Prepolymer 9 | | | | | | | | 210 | |
| | | | | | | | | | |
| Index | 340 | 340 | 330 | 330 | 330 | 335 | 340 | 333 | 330 |
| | | | | | | | | | |
| Haftung [N/mm$^2$] | 0,11 | 0,15 | 0,14 | 0,18 | 0,16 | 0,16 | 0,15 | 0,16 | 0,12 |
| Anzahl der Bodenstörungen | mittel | gering | gering | gering | gering | gering | gering | gering | mittel |
| NCO-Umsatz (Mitte) | 91% | 94% | 93% | 95% | 93% | 94% | 94% | 95% | 93% |
| NCO-Umsatz (Rand) | 85% | 89% | 88% | 87% | 89% | 88% | 88% | 89% | 87% |

Tabelle 3. Beispiele für den Einfluss von nicht konstanten Verarbeitungsbedingungen: Doppelbandtemperatur von 55°C (Beispiele 1 und 2) sowie Einsatz von kontaminierten Blechen (Beispiele 3 und 4).

| | 10 | 11 | 12 | 13 |
|---|---|---|---|---|
| Polyesterol 1 | 48 | 48 | 48 | 48 |

(fortgesetzt)

| | 10 | 11 | 12 | 13 |
|---|---|---|---|---|
| Polyesterol 2 | 20 | 20 | 20 | 20 |
| Polyetherol 2 | 10 | 10 | 10 | 10 |
| Flammschutzmittel | 20 | 20 | 20 | 20 |
| Stabilisator | 2 | 2 | 2 | 2 |
| | | | | |
| Katalysator 1 | 1,5 | 1,5 | 1,5 | 1,5 |
| Katalysator 2 | 1,5 | 1,5 | 1,5 | 1,5 |
| | | | | |
| Treibmittel 1 | 13 | 14 | 13 | 14 |
| Treibmittel 2 | 0,7 | 0,7 | 0,7 | 0,7 |
| | | | | |
| Isocyanat 3 | 190 | | 190 | |
| Prepolymer 2 | | 210 | | 210 |
| | | | | |
| Index | 340 | 340 | 340 | 340 |
| | | | | |
| Haftung [N/mm$^2$] | 0,08 | 0,12 | 0,07 | 0,1 |
| Anzahl der Bo-denstörungen | hoch | mittel | hoch | mittel |

**Patentansprüche**

1. Verfahren zur Herstellung von Polyurethan- bzw. Polyisocyanurathartschaumstoffen durch Umsetzung von Polyisocyanaten a) mit Verbindungen mit mindestens zwei mit Isocyanatgruppen reaktiven Wasserstoffatomen b) in Anwesenheit von Treibmitteln c), **dadurch gekennzeichnet, dass** als Polyisocyanate a) Isocyanatgruppen enthaltende Prepolymere, mit einem NCO-Gehalt im Bereich von 25 bis 31 Gew.-%, bezogen auf das Gewicht des Prepolymeren, hergestellt durch Umsetzung von ai) Mischungen aus monomerem und polymerem Diphenylmethandiisocyanat mit mindestens einer Verbindung mit mehr als einem mit Isocyanatgruppen reaktiven Wasserstoffatom aii), eingesetzt werden, und die Verbindungen mit mindestens zwei mit Isocyanatgruppen reaktiven Wasserstoffatomen, b) mindestens einen Polyesteralkohol bi), der mindestens eine Ausgangskomponente enthält, die hydrophob ist, enthalten.

2. Verfahren nach Anspruch 1, **dadurch gekennzeichnet, dass** die Isocyanatgruppen enthaltenden Prepolymere einen NCO-Gehalt im Bereich von 26 - 30 Gew.-%, bezogen auf das Gewicht des Prepolymeren, aufweisen.

3. Verfahren nach Anspruch 1, **dadurch gekennzeichnet, dass** die Isocyanatgruppen enthaltenden Prepolymere einen Gehalt an 2-Kern Diphenylmethandiisocyanat von 28 bis 38 Gew.-%, bezogen auf das Gewicht des Prepolymeren, bevorzugt 30 bis 36-Gew% aufweisen.

4. Verfahren nach Anspruch 1, **dadurch gekennzeichnet, dass** die Gemische aus monomerem und polymerem Diphenylmethandiisocyanat ai) einen NCO-Gehalt von 29 bis 33 Gew.-% aufweisen.

5. Verfahren nach Anspruch 1, **dadurch gekennzeichnet, dass** die Gemische aus monomerem und polymerem Diphenylmethandiisocyanat ai) einen Anteil an monomerem 2-Kern-MDI von 41 $\pm$ 5 Gew.-%, bezogen auf das Gewicht der Mischung, aufweisen.

6. Verfahren nach Anspruch 1, **dadurch gekennzeichnet, dass** die mindestens 2-funktionellen Polyole zur Herstellung

9

der Isocyanatgruppen enthaltenden Prepolymere Polyetheralkohole aii) sind.

7. Verfahren nach Anspruch 1, **dadurch gekennzeichnet, dass** die Polyetheralkohole aii) eine Hydroxylzahl von 50 bis 300 mg KOH/g aufweisen.

8. Verfahren nach Anspruch 1, **dadurch gekennzeichnet, dass** die mindestens 2-funktionellen Polyole aii) zur Herstellung der Isocyanatgruppen enthaltenden Prepolymere Polyesteralkohole sind.

9. Verfahren nach Anspruch 1, **dadurch gekennzeichnet, dass** die Polyesteralkohole aii) eine Hydroxylzahl von 50 bis 400 mg KOH/g aufweisen.

10. Verfahren nach Anspruch 1, **dadurch gekennzeichnet, dass** die Polyesteralkohole aii) unter Mitverwendung mindestens einer hydrophoben Einsatzkomponente hergestellt wurden.

11. Verfahren nach Anspruch 1, **dadurch gekennzeichnet, dass** die Polyole aii) zur Herstellung der Isocyanatgruppen enthaltenden Prepolymere Mischungen aus Polyetheralkoholen und Polyesteralkoholen sind.

12. Verfahren nach Anspruch 1, **dadurch gekennzeichnet, dass** der Polyesteralkohol bi) eine Hydroxylzahl von 100 bis 300 mg KOH/g aufweist.

13. Verfahren nach Anspruch 1, **dadurch gekennzeichnet, dass** die hydrophobe Einsatzkomponente zur Herstellung des Polyesteralkohols bi) Ölsäure ist.

14. Verfahren nach Anspruch 1, **dadurch gekennzeichnet, dass** der Polyesteralkohol bi) im Gemisch mit mindestens einem Polyetheralkohol bii) und/oder mindestens einem Polyesteralkohol biii) eingesetzt wird **dadurch gekennzeichnet, dass** der Polyesteralkohol biii) ohne die Verwendung einer hydrophoben Einsatzkomponente hergestellt wurde.

15. Verfahren nach Anspruch 14, **dadurch gekennzeichnet, dass** in der Komponente b) das Polyol bi) in einer Menge von 20 - 90 Gew.-%, das Polyol bii) in einer Menge von 5 - 30 Gew.-% und biii) in einer Menge von 0 - 90 Gew.-% eingesetzt wird, wobei die Summe aus bi), bii) und biii) 100 beträgt.

16. Verfahren nach Anspruch 1, **dadurch gekennzeichnet, dass** als Treibmittel physikalische Treibmittel und optional chemische Treibmittel eingesetzt werden.

17. Verfahren nach Anspruch 16, **dadurch gekennzeichnet, dass** als chemisches Treibmittel Wasser sowie als physikalisches Treibmittel Wasserstofffluorkohlenstoffe verwendet werden.

18. Verfahren nach Anspruch 16, **dadurch gekennzeichnet, dass** als chemisches Treibmittel Carbonsäuren, bevorzugt Ameisensäure, und als physikalisches Treibmittel Wasserstofffluorkohlenwasserstoffe verwendet werden.

19. Verfahren nach Anspruch 16, **dadurch gekennzeichnet, dass** als chemisches Treibmittel Wasser und als physikalisches Treibmittel Kohlenwasserstoffe, bevorzugt Homologe des Pentan, besonders bevorzugt n-Pentan verwendet werden.

20. Verfahren nach Anspruch 16, **dadurch gekennzeichnet, dass** als chemisches Treibmittel Carbonsäuren, bevorzugt Ameisensäure, und als physikalisches Treibmittel Kohlenwasserstoffe, bevorzugt Homologe des Pentan, besonders bevorzugt n-Pentan verwendet werden.

## Claims

1. A process for producing rigid polyurethane and polyisocyanurate foams by reacting polyisocyanates a) with compounds having at least two hydrogen atoms which are reactive toward isocyanate groups b) in the presence of blowing agents c), wherein prepolymers which comprise isocyanate groups and have an NCO content in the range from 25 to 31% by weight, based on the weight of the prepolymer, and are prepared by reacting ai) mixtures of monomeric and polymeric diphenylmethane diisocyanate with at least one compound having more than one hydrogen atom which is reactive toward isocyanate groups aii) are used as polyisocyanates a) and the compounds having at least two hydrogen atoms which are reactive toward isocyanate groups b) comprise at least one polyester alcohol bi) which comprises at least one starting component which is hydrophobic.

2. The process according to claim 1, wherein the prepolymers comprising isocyanate groups have an NCO content in the range 26 - 30% by weight, based on the weight of the prepolymer.

3. The process according to claim 1, wherein the prepolymers comprising isocyanate groups have a content of 2-ring diphenylmethane diisocyanate of from 28 to 38% by weight, based on the weight on the prepolymer, preferably from 30 to 36% by weight.

4. The process according to claim 1, wherein the mixtures of monomeric and polymeric diphenylmethane diisocyanate ai) have an NCO content of from 29 to 33% by weight.

5. The process according to claim 1, wherein the mixtures of monomeric and polymeric diphenylmethane diisocyanate ai) have a proportion of monomeric 2-ring MDI of $41 \pm 5\%$ by weight, based on the weight of the mixture.

6. The process according to claim 1, wherein the at least 2-functional polyols for preparing the prepolymers comprising isocyanate groups are polyether alcohols aii).

7. The process according to claim 1, wherein the polyether alcohols aii) have a hydroxyl number of from 50 to 300 mg KOH/g.

8. The process according to claim 1, wherein the at least 2-functional polyols aii) for preparing the prepolymers comprising isocyanate groups are polyester alcohols.

9. The process according to claim 1, wherein the polyester alcohols aii) have a hydroxyl number of from 50 to 400 mg KOH/g.

10. The process according to claim 1, wherein the polyester alcohols aii) have been prepared using at least one hydrophobic starting component.

11. The process according to claim 1, wherein the polyols aii) for preparing the prepolymers comprising isocyanate groups are mixtures of polyether alcohols and polyester alcohols.

12. The process according to claim 1, wherein the polyester alcohol bi) has a hydroxyl number of from 100 to 300 mg KOH/g.

13. The process according to claim 1, wherein the hydrophobic starting component for preparing the polyester alcohol bi) is oleic acid.

14. The process according to claim 1, wherein the polyester alcohol bi) is used in a mixture with at least one polyether alcohol bii) and/or at least one polyester alcohol biii), with the polyester alcohol biii) having been prepared without use of a hydrophobic starting component.

15. The process according to claim 14, wherein the polyol bi) is used in an amount of 20 - 90% by weight, the polyol bii) is used in an amount of 5-30% by weight and biii) is used in an amount of 0 - 90% by weight in the component b), with the sum of bi), bii) and biii) being 100.

16. The process according to claim 1, wherein physical blowing agents and optionally chemical blowing agents are used as blowing agents.

17. The process according to claim 16, wherein water is used as chemical blowing agent and hydrogencomprising fluorocarbons are used as physical blowing agent.

18. The process according to claim 16, wherein carboxylic acids, preferably formic acid, are used as chemical blowing agent and hydrogen-comprising fluorocarbons are used as physical blowing agent.

19. The process according to claim 16, wherein water is used as chemical blowing agent and hydrocarbons, preferably homologues of pentane, particularly preferably in n-pentane, are used as physical blowing agent.

20. The process according to claim 16, wherein carboxylic acids, preferably formic acid, are used as chemical blowing agent and hydrocarbons, preferably homologues of pentane, particularly preferably n-pentane, are used as physical blowing agent.

**Revendications**

1. Procédé pour la production de mousses rigides de polyuréthane ou polyisocyanurate par mise en réaction de polyisocyanates a) avec des composés b) comportant au moins deux atomes d'hydrogène réactifs avec des groupes isocyanate, en présence d'agents porogènes c), **caractérisé en ce qu'**on utilise comme polyisocyanates a) des prépolymères contenant des groupes isocyanate, ayant une teneur en NCO dans la plage de 25 à 31 % en poids, par rapport au poids du prépolymère, préparés par mise en réaction de ai) mélanges de diphénylméthanediisocyanate monomère et de diphénylméthanediisocyanate polymère avec aii) au moins un composé comportant plus d'un atome d'hydrogène réactif avec des groupes isocyanate, et les composés b) comportant au moins deux atomes d'hydrogène réactifs avec des groupes isocyanate comprennent au moins un polyesteralcool bi) qui contient au moins un composant de départ qui est hydrophobe.

2. Procédé selon la revendication 1, **caractérisé en ce que** les prépolymères contenant des groupes isocyanate présentent une teneur en NCO dans la plage de 26 - 30 % en poids, par rapport au poids du prépolymère.

3. Procédé selon la revendication 1, **caractérisé en ce que** les prépolymères contenant des groupes isocyanate présentent une teneur en diphénylméthane-diisocyanate binucléaire de 28 à 38 % en poids, de préférence de 30 à 36 % en poids, par rapport au poids du prépolymère.

4. Procédé selon la revendication 1, **caractérisé en ce que** les mélanges ai) de diphénylméthane-diisocyanate monomère et diphénylméthanediisocyanate polymère présentent une teneur en NCO de 29 à 33 % en poids.

5. Procédé selon la revendication 1, **caractérisé en ce que** les mélanges ai) de diphénylméthane-diisocyanate monomère et diphénylméthanediisocyanate polymère présentent une teneur en MDI binucléaire monomère de 41 $\pm$ 5 % en poids, par rapport au poids du mélange.

6. Procédé selon la revendication 1, **caractérisé en ce que** les polyols au moins bifonctionnels pour la préparation des prépolymères contenant des groupes isocyanate sont des polyétheralcools aii).

7. Procédé selon la revendication 1, **caractérisé en ce que** les polyétheralcools aii) présentent un indice de groupes hydroxy de 50 à 300 mg de KOH/g.

8. Procédé selon la revendication 1, **caractérisé en ce que** les polyols au moins bifonctionnels aii) pour la préparation des prépolymères contenant des groupes isocyanate sont des polyesteralcools.

9. Procédé selon la revendication 1, **caractérisé en ce que** les polyesteralcools aii) présentent un indice de groupes hydroxy de 50 à 400 mg de KOH/g.

10. Procédé selon la revendication 1, **caractérisé en ce que** les polyesteralcools aii) ont été préparés ave utilisation simultanée d'au moins un composant hydrophobe de départ.

11. Procédé selon la revendication 1, **caractérisé en ce que** les polyols aii) pour la préparation des prépolymères contenant des groupes isocyanate sont des mélanges de polyétheralcools et de polyesteralcools.

12. Procédé selon la revendication 1, **caractérisé en ce que** le polyesteralcool bi) présente un indice de groupes hydroxy de 100 à 300 mg de KOH/g.

13. Procédé selon la revendication 1, **caractérisé en ce que** le composant hydrophobe de départ pour la préparation du polyesteralcool bi) est l'acide oléique.

14. Procédé selon la revendication 1, **caractérisé en ce qu'**on utilise le polyesteralcool bi) en mélange avec au moins un polyétheralcool bii) et/ou au moins un polyesteralcool biii) **caractérisé en ce que** le polyesteralcool biii) a été préparé sans l'utilisation d'un composant hydrophobe de départ.

15. Procédé selon la revendication 14, **caractérisé en ce que** dans le composant b) on utilise le polyol bi) en une quantité de 20 - 90 % en poids, le polyol bii) en une quantité de 5 - 30 % en poids et biii) en une quantité de 0 - 90 % en poids, la somme de bi), bii) et biii) étant égale à 100.

16. Procédé selon la revendication 1, **caractérisé en ce qu'**on utilise comme agent porogène des agents porogènes physiques et en option des agents porogènes chimiques.

17. Procédé selon la revendication 16, **caractérisé en ce qu'**on utilise comme agent porogène chimique l'eau ainsi que comme agent porogène physique des hydrofluorocarbures.

18. Procédé selon la revendication 16, **caractérisé en ce qu'**on utilise comme agent porogène chimique des acides carboxyliques, l'acide formique de préférence, et comme agent porogène physique des hydrofluorohydrocarbures.

19. Procédé selon la revendication 16, **caractérisé en ce qu'**on utilise comme agent porogène chimique l'eau et comme agent porogène physique des hydrocarbures, de préférence des homologues du pentane, de façon particulièrement préférée le n-pentane.

20. Procédé selon la revendication 16, **caractérisé en ce qu'**on utilise comme agent porogène chimique des acides carboxyliques, de préférence l'acide formique, et comme agent porogène physique des hydrocarbures, de préférence des homologues du pentane, de façon particulièrement préférée le n-pentane.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5164422 A
- EP 320134 A
- US 5254600 A
- EP 394736 A
- JP 2000264945 A
- WO 240566 A
- WO 0023491 A
- EP 0415159 A

**In der Beschreibung aufgeführte Nicht-Patentliteratur**

- Kunststoffhandbuch. Polyurethane. 1966, vol. 7
- POLYURETHANE. 1983
- POLYURETHANE. 1993